# EUROPEAN PATENT SPECIFICATION

(11) **EP 2 178 245 B1**
(45) Date of publication and mention of the grant of the patent: **03.07.2013**
(21) Application number: 08850882.5
(22) Date of filing: 10.11.2008
(51) Int. Cl.: H04L 12/14, H04M 17/00, H04M 15/00, H04W 4/24

(54) **A CHARGING METHOD, A CHARGING NETWORK ELEMENT, A CHARGING SYSTEM AND A COMMUNICATION SYSTEM**
EIN ABRECHNUNGSVERFAHREN , EIN ABRECHNUNGSNETZWERKELEMENT, EIN ABRECHNUNGSSYSTEM UND EIN KOMMUNIKATIONSSYSTEM
PROCÉDÉ DE FACTURATION, ÉLÉMENT DE RÉSEAU DE FACTURATION, SYSTÈME DE FACTURATION ET SYSTÈME DE COMMUNICATION

(30) Priority: 15.11.2007 CN 200710170389; 28.12.2007 CN 200710305686; 03.02.2008 CN 200810006124
(43) Date of publication of application: 21.04.2010
(73) Proprietor: Huawei Technologies Co., Ltd., Longgang District, Shenzhen Guangdong 518129 (CN)
(72) Inventor: SHAN, Mingjun, Guangdong 518129 (CN); KANG, Jiao, Guangdong 518129 (CN); LI, Chun, Guangdong 518129 (CN); SHI, Xin, Guangdong 518129 (CN)
(74) Representative: Isarpatent
(86) International application number: PCT/CN2008/072992
(87) International publication number: WO 2009/062442

(56) References cited:
- EP-A1- 2 466 866
- WO-A1-03/081843
- WO-A1-2007/026268
- WO-A2-01/91446
- CN-A- 1 444 824
- CN-A- 1 643 846
- CN-A- 1 983 938
- CN-A- 101 005 384
- US-A1- 2007 041 536

## Description

### Field of the Invention

The disclosure relates to communication charging technologies, and in particular, to a charging method, a charging network element, a charging system, and a communication system.

### Background of the Invention

The major concern of online charging is that charging information needs to exert an ef fect on the service provision in real time, which requires a charging system to interact with a serving network element in real time. An Online Charging System (OCS) exercises credit control on a user, handles the service transaction, performs rating according to the corresponding charging policy, associates the charging policy with the control policy online, and manages the account balance of the user in real time. From that perspective, the essence of online charging is real-time control and real-time charging.

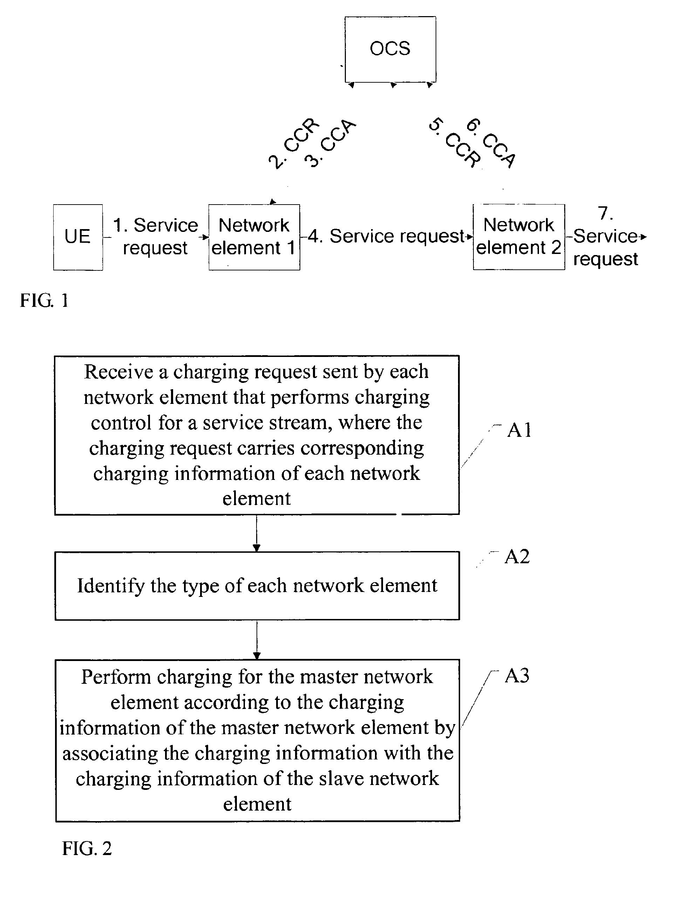

In the existing communication network, a network is divided into a bearer layer, a control layer, and a service layer. For many services, the use of a service involves network elements at all layers. Therefore, a complete charging solution is specific to the three layers. The network elements at different layers report the corresponding charging information. For example, at the bearer layer, a Gateway GRPS Support Node (GGSN) reports the traffic information; at the IP Multimedia Subsystem (IMS) layer, a Serving-Call Session Control Function (S-CSCF) reports the IMS layer-related charging information; and, at the service layer, an Application Server (AS) reports the charging information related to data services, as detailed below with reference to the charging architecture of a communication system in the prior art. In FIG. 1, network element 1 and network element 2 represent the charging network elements that are necessarily involved in the provision of services for a user.

Step 1: A User Equipment (UE) sends a service request to a network element 1.

Steps 2-3: The network element 1 and the OCS perform online charging control. Specifically, the network element 1 sends a charging request to the OCS, performs charging control with the OCS, and then returns a charging response.

Step 4: After determining that the service request is accepted, the network element 1 forwards the service request to the network element 2.

Steps 5-6: The network element 2 interacts with the OCS to perform online charging control.

Step 7: After determining that the service request is accepted, the network element 2 forwards the service request to the next network element.

As shown in FIG. 1, the service request of the user passes through all the charging network elements sequentially, and each charging network element interacts with the OCS to perform service control.

During the research and practice of the disclosure, the inventor finds at least the following defects in the prior art:

In the online charging solution in the prior art, the network elements at each layer play an equal role of charging. That is, in the online charging for the same service, the charging system performs credit control for every network element, namely, reserves a quota. Every network element needs to monitor the use of the quota in real time, and the OCS performs a complete charging control process for every network element. Thus, the charging process is complicated; the load of processing and interaction between the charging system and the charging network element is increased; and the system resources are wasted.

WO 03/081843 A1 discloses a method of charging a subscriber for using GPRS services provided by a mobile communications network. The method comprises including in PDP activation messages sent from a UE used by the subscriber to a GGSN of the network, a flag indicating whether the PDP context is to be used for signalling data or user data. This flag is examined within the network or at a node external to the network, and if the flag indicates that the PDP context is to be used for carrying signalling data, a first charging regime is applied to the subscriber for establishing and using the context, and if the flag indicates that the PDP context is to be used for carrying user data, a different charging regime is applied to the subscriber for establishing and/or using the context The flag may be distributed by the GGSN to other network nodes for inclusion in charging messages.

### Summary of the Invention

A charging method and a charging system are provided in embodiments of the disclosure to simplify the charging process, to reduce the charging complexity, and to save the system resources.

A charging method provided in an embodiment of the disclosure includes:
receiving, by a charging system, a charging request sent by a master network element performing charging control for a service stream and a charging request sent by a slave network element performing charging control for the service stream, wherein the charging requests carry corresponding charging information of each network element;
returning, by the charging system, a charging response to the slave network element to indicate that the slave network element does not need to report the charging information subsequently; and
performing, by the charging system, credit control for the master network element, which monitors use of a quota, according to the charging information of the master network element by associating the charging information of the master network element with the charging information of the slave network element.

A charging system provided in an embodiment of the disclosure includes:
a receiving unit, configured to receive a charging request sent by a master network element performing charging control for a service stream and a charging request sent by a slave network element performing charging control for the service stream, wherein the charging requests carry corresponding charging information of each network element;
a network element type identifying unit, configured to identify the type of each network element, comprising the master network element and the slave network element; and
a charging control unit, configured to return a charging response to the slave network element to indicate that the slave network element does not need to report the charging information subsequently, and to perform credit control for the master network element, which monitors use of a quota, according to the charging information of the master network element by associating the charging information of the master network element with the charging information of the slave network element.

In the embodiments of the disclosure, network elements are categorized into a master network element and a slave network element; the charging is triggered by the master network element, and the slave network element is responsible for reporting the charging information without credit control. In the charging process, credit control is performed for the master network element in view of the charging information of the slave network element, and centralized charging is performed at the master network element. Compared with the prior art, the disclosure simplifies the charging process, reduces the load of processing and interaction between the charging system and the charging network element, and saves the system resources.

### Brief Description of the Drawings

FIG. 1 shows a charging architecture of a communication system in the prior art;
FIG. 2 is a flowchart of a charging method in a first example of the disclosure;
FIG. 3 is a signaling flowchart of a charging method in a second example of the disclosure;
FIG. 4 is a signaling flowchart of a charging method in a third example of the disclosure;
FIG. 5 is a signaling flowchart of a charging method in one embodiment of the disclosure;
FIG. 6 is a signaling flowchart of a charging method in another example of the disclosure;
FIG. 7 is a signaling flowchart of a charging method in another example of the disclosure;
FIG. 8 is a signaling flowchart of a charging method in another example of the disclosure;
FIG. 9 is a signaling flowchart of a charging method in another example of the disclosure;
FIG. 10 shows a structure of a charging system in another embodiment of the disclosure;
FIG. 11 shows a structure of a charging network element in another example of the disclosure;
FIG. 12 shows a structure of a communication system in another example of the disclosure; and
FIG. 13 is a signaling flowchart of a charging method in another example of the disclosure.

### Detailed Description of the Invention

A charging method, and charging system, A charging method, and a charging system, applied in the communication field are provided in embodiments of the disclosure and detailed below.

### First example

A charging method is provided in this example. As shown in FIG. 2, the charging method includes the following steps:

A1. A charging request sent by each network element which performs charging control for a service stream is received. The charging request carries corresponding charging information of each network element.

In this example the service stream sequentially passes through the network elements which perform charging control for the service. That is, when a network element approves the charging, the network element sends the charging request of the user to the next network element. Upon receiving the service request of the user, each network element sends a charging request to the charging system, where the charging request carries the corresponding charging information and charging node type of each network element.

The charging node type is an identifier preset in the system for identifying the network element type.

A2. The type of each network element is identified, including a master network element and a slave network element.

It is understandable that the charging request sent by each network element further carries the charging node type of the network element.

The process of identifying the type of each network element includes:

The charging system identifies the type of each network element according to the charging node type in the charging request.

In the examples of the disclosure, the network elements are categorized according to their roles in the charging process. For a service which requires sequential charging performed by multiple network elements, the types of the network elements may include: a master network element, and a slave network element. The charging system may identify the type of each network element according to the charging node type reported by the network element.

For example, the charging node type is denoted by an Attribute Value Pair (AVP) parameter "NodeType". If the value of the NodeType parameter in the charging request reported by the network element is 1, it is indicated that the network element is a master network element; and, if the value of the NodeType parameter in the charging request reported by the network element is 0, it is indicated that the network element is a slave network element.

In the examples of the disclosure, a NodeType AVP is extended in the charging request sent by the existing network element. This NodeType is an enumerated type, and its value represents the network type, for example:
NodeType = 1, indicating a master network element;
NodeType = 0, indicating a slave network element;
NodeType = 2, indicating an ordinary network element.

It is understandable that the types of the network elements may further include ordinary network elements. After receiving a charging request from an ordinary network element, the charging system performs charging according to the existing charging mode, which is not limited herein.

In the examples of the disclosure, the type of the network element may be identified according to the charging information in the charging request sent by each network element. For example, the network element type is identified according to the service identifier of the network element, and/or subscription information, and/or network configuration information, which is conventional information carried in the charging request. It is understandable that the network element may play different roles corresponding to different types, depending on the service provided. For example, a network element may serve as a master network element in one service and serve as a slave network element in another service.

Taking the Multimedia Message Service (MMS) as an example, the GGSN needs to report a traffic-based Credit Control Request (CCR) to the OCS. The charging request carries the service identifier for identifying the MMS. After the charging association is enabled, charging control should be performed for the MMS on a Multimedia Message Service Center (MMSC) according to the charging policy of the operator. The OCS detects that the service identifier in the charging message sent by the GGSN identifies an MMS service, and therefore, confirms that the GGSN is a slave charging network element for the MMS at this time.

In addition, the judgment logic may be based on the subscription relation. For example, for a category-A user who uses an MMS service, no MMS charge is required, and all charges are included into the GGSN traffic expense. In this case, the GGSN is a master charging network element; and, for a category-B user who sends a Multimedia Message (MM), the charge is calculated not according to the traffic consumed by the MM, but according to the quantity of MM. In this case, the MMSC is a master charging network element.

The type of each network element may be identified in many modes, for example, through a network element identifier. The IP address, Uniform Resource Identifier (URI) or service identifier may be combined with the network element identifier to indicate the type of the network element. In this identification mode, the type of the network element is identifiable even if the network element does not add its type identifier into the charging request. The major concern of this embodiment is: The network elements are categorized in view of the role of each network element in the charging process. The categorization mode and the identifier fall into many types, and do not constitute any limitation to the disclosure.

It is understandable that after the charging system receives the charging request of the network element, if the network element type is identified as a slave network element, the charging system returns a charging response to the network element after the charging processing. The charging response instructs the service stream to continue. The charging system may further judge whether the network element is the last network element which performs charging control for the service stream, and continue performing the subsequent steps if such is the case.

The charging response returned to the slave network element carries a result identifier of credit control for the master network element. The identifier may be used to identify virtual authorization or normal service control. If the charging response carries a credit control result identifier, it is indicated virtual authorization; otherwise, it is indicated normal service control.

Each value of the credit control result identifier indicates different virtual authorization, thus enabling the charging system to control network elements. For example:

A value of the credit control result identifier indicates that the network element needs to monitor use of service resources without the necessity of monitoring use of the quota, and needs to further report the charging information when preset trigger conditions are fulfilled.

A value of the credit control result identifier may indicate that the virtual authorization succeeds and that the quota of the credit control for this service charging request is infinite.

A value of the credit control result identifier may indicate that the NE does not need to report the charging information subsequently.

If the charging system identifies that the network element type is a master network element, the charging system may further judge whether the master network element is the last network element which performs charging control for this service stream. If such is the case, the process proceeds to step A3, where charging is performed according to the charging information of the master network element by associating the charging information with the charging information of the slave network element; and, if such is not the case, the charging system returns a charging response to the network element to indicate that the temporary authorization succeeds and that the subsequent credit control is pending.

It is understandable that the credit control result identifier may also be used to control the master network element. The charging response returned to the network element carries the credit control result identifier. A value of the credit control result identifier is used to notify the master network element that the temporary authorization succeeds and that the subsequent credit control is pending.

A3. Charging is performed according to the charging information of the master network element by associating the charging information with the charging information of the slave network element.

Given below is an exemplary charging process:

The charging system performs credit control for the master network element which controls this service stream according to the charging information of the master network element by associating the charging information with the charging information of the slave network element.

The master network element monitors use of the quota.

It is understandable that if the last network element which performs charging control for this service stream is a slave network element, the charging system may perform credit control for the master network element in this way:
(1) The charging system sends to the master network element a notification of reapplying for a quota.
(2) The master network element receives the notification, and sends a charging request to the charging system.
(3) The charging system performs rating, quota reservation and/or expense deduction for the master network element according to the charging information of the master network element by associating the charging information with the charging information of the slave network element, and returns the quota that needs to be monitored to the master network element.

If the last network element which performs charging control for this service stream is a master network element, the charging system may perform credit control for the master network element in the following way after receiving a charging request of the master network element:

The charging system performs rating, quota reservation and/or expense deduction for the master network element according to the charging information of the master network element by associating the charging information with the charging information of the slave network element, and returns the quota that needs to be monitored to the master network element.

In the first example of the disclosure, the charging control is triggered by the master network element, and the slave network element is responsible for reporting the charging information without performing charging control. In the charging process, credit control is performed for the master network element in view of the charging information of the slave network element, and centralized charging is performed at the master network element. Compared with the prior art, the disclosure simplifies the charging process, reduces the load of processing and interaction between the charging system and the charging network element, and saves the system resources.

It is understandable to those skilled in the art that all or part of the steps of the foregoing embodiment may be implemented by hardware instructed by a program. The program may be stored in a computer-readable storage medium. When being executed, the program performs the following steps:
receiving a charging request sent by each network element which performs charging control for a service stream, where the charging request carries corresponding charging information of each network element;
identifying the type of each network element, including a master network element and a slave network element; and
performing charging according to the charging information of the master network element by associating the charging information with the charging information of the slave network element.

The storage medium may be a Read-Only Memory (ROM), a magnetic disk, or a compact disk.

### Second example

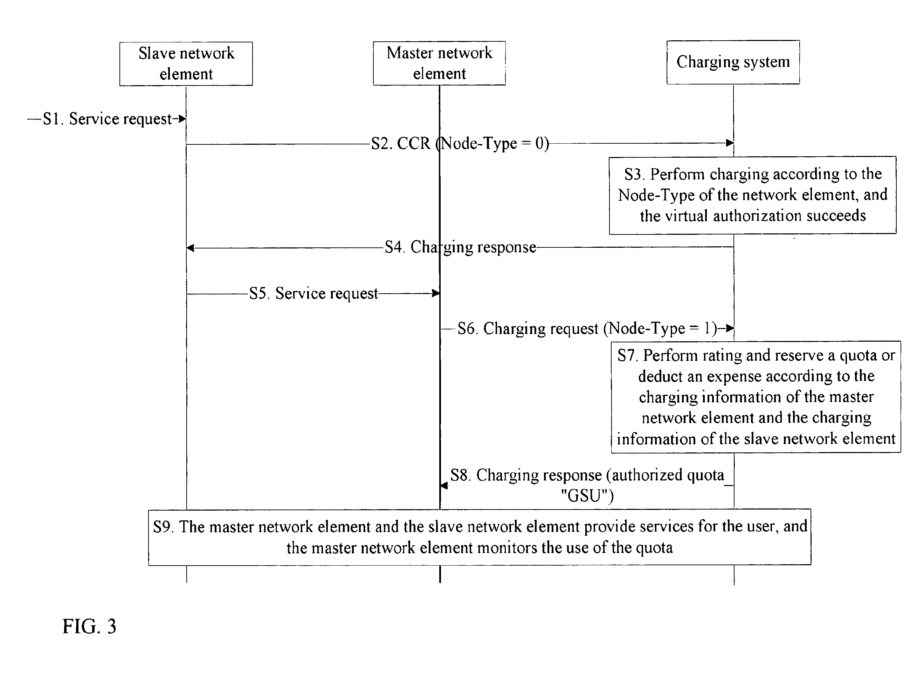

A charging method is provided in this example. FIG. 3 shows a signaling flowchart of this method. The method includes the following steps:

To apply the method in the first example to the event-type service charging signaling flow, it is assumed that two network elements (a master network element and a slave network element) perform charging control for the service in the second embodiment.

The flow includes the following steps:
S1. The slave network element receives a service request of the user.
S2. The slave network element sends a charging request to the charging system. The charging request carries charging information and the charging node identifier "NodeType = 0" of the slave network element.

It is understandable that in this example, the charging request may carry no charging node type identifier, and that the type of each network element is identified according to the charging information in the charging request sent by each network element. For example, the network element type is identified according to the service identifier of the network element, and/or subscription information, and/or network configuration information, which is conventional information carried in the charging request.

S3. The charging system receives the charging request, records the charging information in the charging request, and identifies that the network element is a slave network element because the value of the charging node identifier NodeType is 0.

S4. The charging system returns a charging response to the slave network element. If the value of the credit control result identifier carried in the charging response is 0, it is indicated virtual authorization and no charging information needs to be reported subsequently.

It is understandable that the value of the credit control result identifier may be 0 or 1, which indicates a specific scenario of virtual authorization. If the value of the credit control result identifier is 0, it is indicated that no charging information needs to be reported subsequently; and, if the value of the credit control result identifier is 1, it is indicated that the network element needs to monitor use of service resources without the necessity of monitoring use of the quota, and needs to further report the charging information when preset trigger conditions are fulfilled.

If the value of the credit control result identifier is 2, it is indicated normal service control, and the charging system and the network element perform charging control in the conventional mode.

S5. The slave network element forwards the service request of the user to the master network element.

S6. The master network element sends a charging request to the charging system. The charging request carries charging information and the charging node identifier "NodeType = 1" of the master network element.

S7. According to the charging node identifier "NodeType = 1", the charging system identifies that the network element is a master network element, and determines that the master network element is the last network element which performs charging control for this service stream. Therefore, the charging system performs rating and reserves a quota for the master network element according to the charging information of the master network element by associating the charging information with the charging information of the slave network element.

S8. The charging system returns a charging response to the master network element. The charging response carries the authorized quota.

S9. The master network element and the slave network element provide services for the user, and the master network element monitors the use of the quota.

Optionally, in step S7, the charging system may further deduct an expense; or, after the service is completed in step S9, the master network element sends a charging request which carries the used quota to the charging system, and then the charging system deducts an expense and returns a charging response.

### Third example

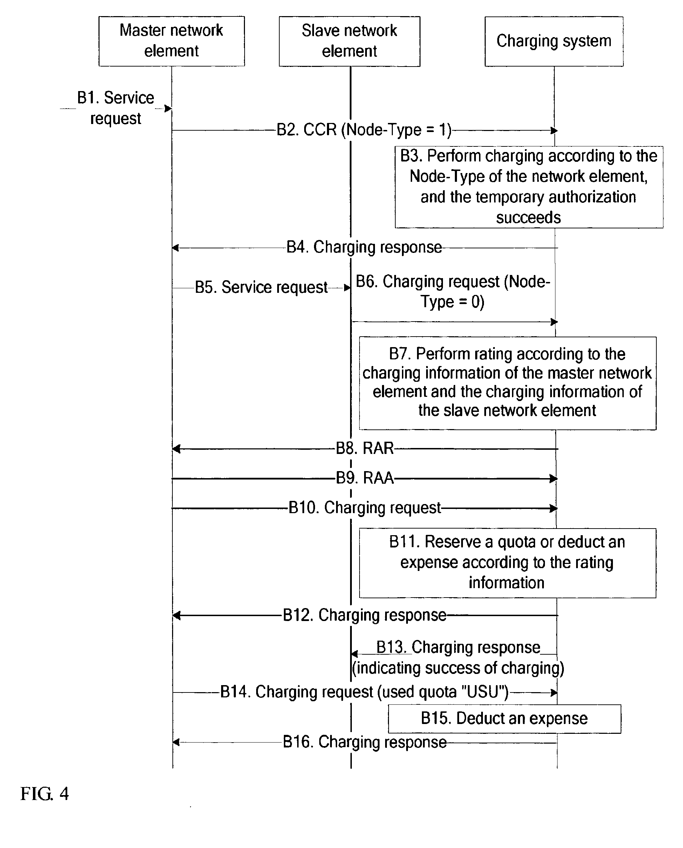

A charging method is provided in this example. The signaling flow of this charging method, namely, the signaling flow of applying the method in the first embodiment to the event-type service charging, is shown in FIG. 4. In the third example, it is assumed that two network elements (a master network element and a slave network element) perform charging control for the service.

The flow includes the following steps:
B1. The master network element receives a service request of the user.
B2. The master network element sends a charging request to the charging system. The charging request carries charging information and the charging node identifier "NodeType = 1" of the master network element.

It is understandable that in this example, the charging request may carry no charging node type identifier, and that the type of each network element is identified according to the charging information in the charging request sent by each network element. For example, the network element type is identified according to the service identifier of the network element, and/or subscription information, and/or network configuration information, which is conventional information carried in the charging request.

B3. The charging system receives the charging request, records the charging information in the charging request, and identifies that the network element is a master network element because the value of the charging node identifier NodeType is 1.

B4. The charging system returns a charging response to the master network element, indicating that the temporary authorization succeeds and that the subsequent credit control is pending.

B5. The master network element forwards the service request of the user to the slave network element.

B6. The slave network element sends a charging request to the charging system. The charging request carries charging information and the charging node identifier "NodeType = 0" of the slave network element.

B7. According to the charging node identifier "NodeType = 0", the charging system identifies that the network element is a slave network element, and determines that the slave network element is the last network element which performs charging control for this service stream. Therefore, the charging system performs rating for the master network element according to the charging information of the master network element by associating the charging information with the charging information of the slave network element. In this embodiment, the charging system needs to associate the charging information of the master network element with the charging information of the slave network element. The specific association mode may be determined according to multiple calculation rules, and is not stipulated herein.

It is understandable that in this example, the charging system may judge whether each network element is the last network element which performs charging control for the service stream according to the service identifier, subscriber identifier and the service-related information in the charging request. The specific judgment mode may be the conventional mode in the prior art, and is not described further.

B8. The charging system notifies the master network element to resend a charging request for applying for a quota.

89. The master network element returns an OK message to the charging system.

B10. The master network element sends a charging request to the charging system.

B11. The charging system reserves a quota according to the rating information.

B12. The charging system returns a charging response which carries the reserved quota to the master network element.

B13. The charging system returns a charging response to the slave network element to indicate success of charging.

B14. After completion of the service, the master network element sends a charging request to the charging system. The charging request carries the used quota.

B15. The charging system deducts an expense from the account balance of the user. B16. The charging system returns a charging response to the master network element.

It is understandable that step B7 may be performed after step B9. The major concern here is that the master network element triggers the charging. The charging process may be performed before or after the master network element sends the charging request so long as the charging result is returned to the master network element.

In this example charging is performed for the event-type services such as MMS. Due to the features of the event-type service, the expense may be deducted from the account balance of the user during the quota reservation in step B11. The specific occasion of deduction does not constitute any limitation to the disclosure.

### One Embodiment

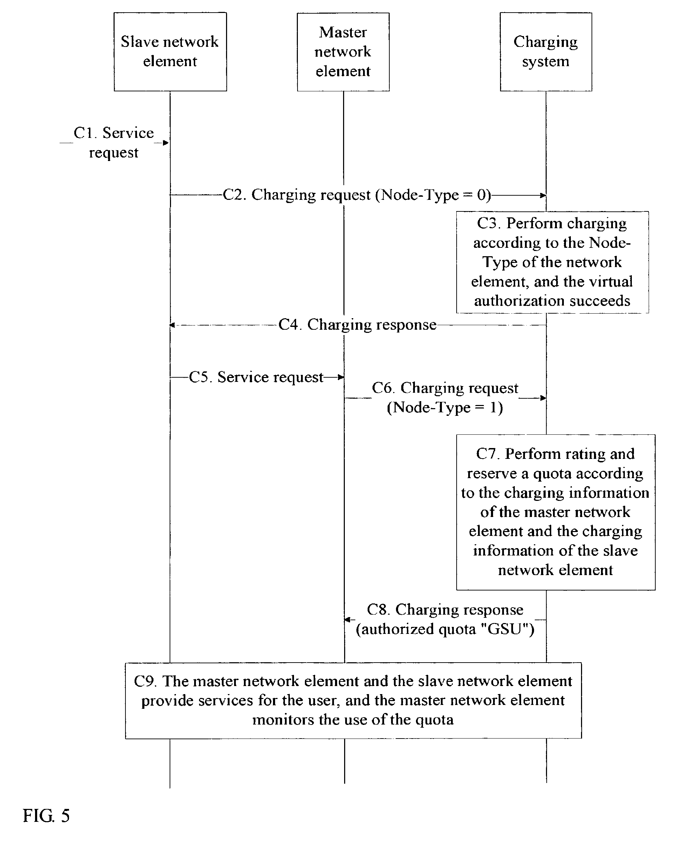

A charging method is provided in this embodiment. The signaling flow of this charging method, namely, the signaling flow of applying the method in the first embodiment to the session-type service charging, is shown in FIG. 5. In the fourth embodiment, it is assumed that two network elements (a master network element and a slave network element) perform charging control for the service.

C1. The slave network element receives a service request of the user.

C2. The slave network element sends a charging request to the charging system. The charging request carries charging information and the charging node identifier "NodeType = 0" of the slave network element.

It is understandable that in this embodiment, the charging request may carry no charging node type identifier, and that the type of each network element is identified according to the charging information in the charging request sent by each network element. For example, the network element type is identified according to the service identifier of the network element, and/or subscription information, and/or network configuration information, which is conventional information carried in the charging request.

C3. The charging system receives the charging request, records the charging information in the charging request, and identifies that the network element is a slave network element because the value of the charging node identifier NodeType is 0.

C4. The charging system returns a charging response to the slave network element. If the credit control result identifier carried in the charging response is 0, it is indicated virtual authorization, which means that the network element needs to monitor use of service resources without the necessity of monitoring use of the quota, and needs to further report the charging information when preset trigger conditions are fulfilled.

It is understandable that the value of the credit control result identifier is 0 or 1, indicating two different scenarios of virtual authorization. If the value of the credit control result identifier is 2, it is indicated normal service control, and the charging system and the network element perform charging control in the conventional mode. The specific identifier value and the corresponding type are diversified, and do not constitute any limitation to the disclosure.

C5. The slave network element forwards the service request of the user to the master network element.

C6. The master network element sends a charging request to the charging system. The charging request carries charging information and the charging node identifier "NodeType = 1" of the master network element.

C7. According to the charging node identifier "NodeType = 1", the charging system identifies that the network element is a master network element, and determines that the master network element is the last network element which performs charging control for this service stream. Therefore, the charging system performs rating and reserves a quota for the master network element according to the charging information of the master network element by associating the charging information with the charging information of the slave network element.

C8. The charging system returns a charging response to the master network element. The charging response carries the authorized quota.

C9. The master network element and the slave network element provide services for the user, and the master network element monitors the use of the quota.

### Another exemple

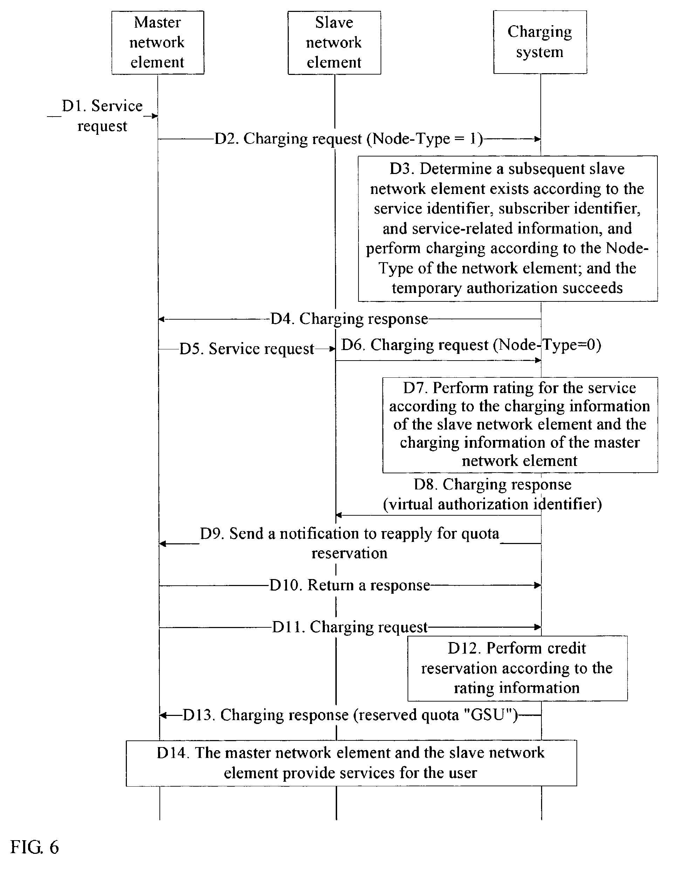

A charging method is provided in this example. The signaling flow of this charging method, namely, the signaling flow of applying the method in the first embodiment to the session-type service charging, is shown in FIG. 6. In the fifth example, it is assumed that two network elements (a master network element and a slave network element) perform charging control for the service. This example differs from the fourth embodiment in that the master network element initiates the charging request first.

The flow includes the following steps:
D1. The master network element receives a service request of the user.
D2. The master network element sends a charging request to the charging system. The charging request carries charging information and the charging node identifier "NodeType = 1" of the master network element.

It is understandable that in this embodiment, the charging request may carry no charging node type identifier, and that the type of each network element is identified according to the charging information in the charging request sent by each network element. For example, the network element type is identified according to the service identifier of the network element, and/or subscription information, and/or network configuration information, which is conventional information carried in the charging request.

D3. The charging system receives the charging request, records the charging information in the charging request, and identifies that the network element is a master network element because the value of the charging node identifier NodeType is 1. According to the service identifier, subscriber identifier, and service-related information, the charging system determines that a subsequent charging network element still exists for this service stream.

D4. The charging system returns a charging response to the master network element, indicating that the temporary authorization succeeds and that the subsequent credit control is pending.

D5. The master network element forwards the service request of the user to the slave network element.

D6. The slave network element sends a charging request to the charging system. The charging request carries charging information and the charging node identifier "NodeType = 0" of the slave network element.

D7. According to the charging node identifier "NodeType = 0", the charging system identifies that the network element is a slave network element, and determines that the slave network element is the last network element which performs charging control for this service stream. Therefore, the charging system performs rating for the master network element according to the charging information of the master network element by associating the charging information with the charging information of the slave network element.

D8. The charging system returns a charging response to the slave network element to perform virtual authorization.

D9. The charging system notifies the master network element to resend a charging request for applying for a quota.

D10. The master network element returns a response to the charging system.

D11. The master network element sends a charging request to the charging system. D12. The charging system reserves a quota according to the rating information.

D13. The charging system returns a charging response which carries the reserved quota to the master network element.

D14. The master network element and the slave network element provide services for the user.

### Another example

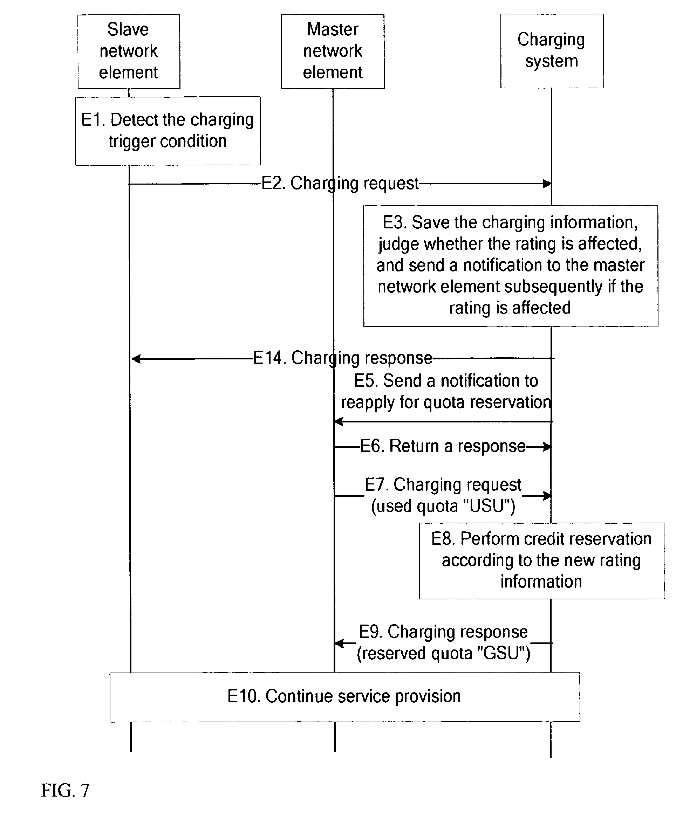

A charging method is provided in this example. The signaling flow of the charging method is shown in FIG. 7. This example provides a processing flow of charging update in the case that the slave network element detects the preset charging trigger condition on the basis of the third embodiment and the fourth embodiment.

The flow includes the following steps:
E1. In the session process, the slave network element detects the charging trigger condition.
E2. The slave network element sends a charging request to the charging system. The charging request carries charging information.
E3. The charging system judges whether the rating is affected according to the charging information. If the rating is affected, the charging system triggers the charging update.

In this embodiment, the charging information of the master network element needs to be associated with the charging information of the slave network element, and the specific charging rule is diversified. Therefore, the charging system needs to judge whether the charging needs to be updated.

Taking the MMS as an example, the slave network element is a bearer-layer network element, and the master network element is a service-layer network element. The charging system performs charging for the MMS for the master network element according to the charging information of the master network element by associating the charging information with the charging information of the slave network element. For example, the bearer layer reports the charging information in the case of 100K traffic.

The charging information of the master network element is associated with the charging information of the slave network element in this way: The charge for bearer-layer traffic lower than 1000K is equivalent to the charge for one MM, and the charge for bearer-layer traffic equal to or higher than 1000K is equivalent to 2 yuan.

Therefore, the charging update process is triggered if the charging information reported by the bearer layer indicates traffic higher than 1000K.

E4. The charging system returns a charging response to the slave network element.

E5. The charging system notifies the master network element to reapply for quota reservation.

E6. The master network element returns a response.

E7. The master network element sends a charging request to the charging system. The charging request carries the used quota.

E8. The charging system performs rating and reserves a quota again according to the charging information of the master network element and the charging information of the slave network element.

E9. The charging system returns a charging response to the master network element. The charging response carries the reauthorized quota.

E10. The master network element and the slave network element continue providing services for the user.

It is understandable that the charging system notifies the master network element to reapply for the quota once detecting that the rating information has changed. The rating information changes possibly because the slave network element reports the charging information again or because the preset time arrives. For example, 0:00-11:00 everyday is a discount period during which the charge for the user consumption is discounted, and the rating information changes upon arrival of the discount period.

It is understandable that in the third to fifth examples, upon completion of the service provision, the master network element sends a charging completion request to the charging system, indicating completion of the charging. The charging completion request carries the used quota. The charging system deducts an expense from the account balance of the user, and returns a charging response.

### Another example

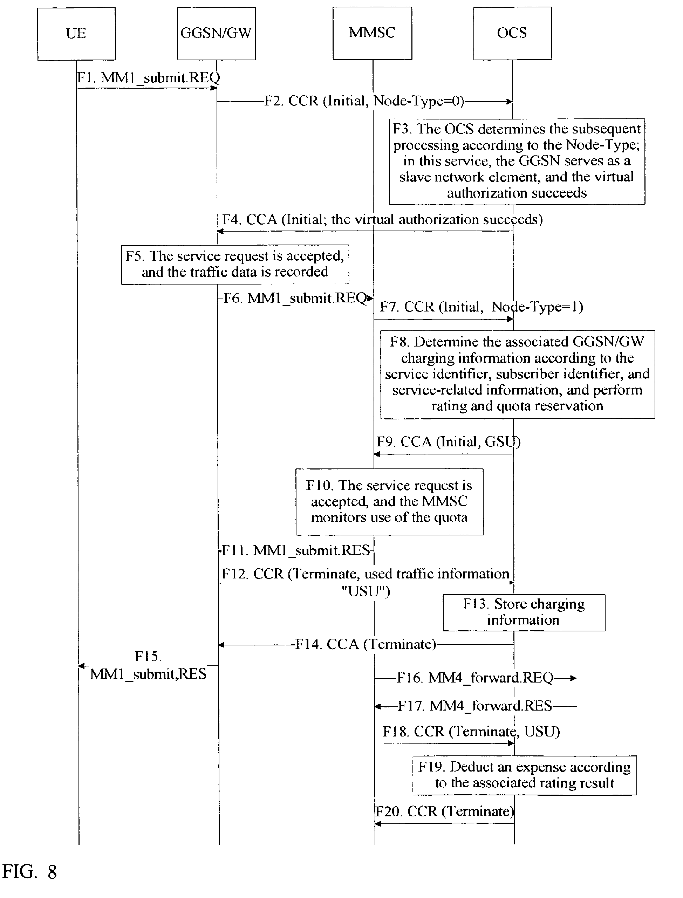

A charging method is provided in this example The signaling flow of the charging method is shown in FIG. 8. In this embodiment, the technical solution under the disclosure is applied to online charging for the MMS.

This example involves two network elements: a master network element, and a slave network element. The flow includes the following steps:
F1. The UE sends "MMI_submit.REQ", namely, an MM sending request, to the GGSN.
F2. The GGSN sends a CCR as a charging request to the OCS. The charging request carries the charging node type "Node-Type = Slave network element" of the GGSN in this service.
F3. It is understandable that in this embodiment, the charging request may carry no charging node type identifier, and that the type of each network element is identified according to the charging information in the charging request sent by each network element. For example, the network element type is identified according to the service identifier of the network element, and/or subscription information, and/or network configuration information, which is conventional information carried in the charging request.
F4. The OCS determines the association according to the service identifier, subscriber identifier, and service-related information. The OCS determines the subsequent charging process according to the Node-Type of the network element. In this MMS, the GGSN reports the charging information as a reference in the online associated charging, and does not need to perform credit control.
F5. The OCS returns a charging response "CCA" to the GGSN, indicating success of the service request. The GGSN records the traffic information.
F6. The GGSN forwards the MM sending request to the MMSC.
F7. The MMSC sends a charging request "CCR" to the OCS. The charging request carries the charging node type "Node-Type = Master network element" of the MMSC in this service.
F8. The OCS determines the association according to the service identifier, subscriber identifier, and service-related information. The OCS determines the subsequent charging process according to the Node-Type. In this MMS, the MMSC serves as a master network element, and the OCS performs associated rating and reserves a quota for the MMSC.
F9. The OCS returns a charging response to the MMSC. The charging response carries a quota reservation result "RSU".
F10. The service request is accepted, and the MMSC monitors use of the quota subsequently.
F11. The MMSC returns "MM1_submit.RES", namely, an MM sending response, to the GGSN.
F12. The GGSN sends a final charging request "CCR" to the OCS to report the traffic information.
F13. The OCS stores the traffic information.
F14. The OCS returns a Credit Control Answer (CCA) as a charging response to the GGSN.
F 15. The GGSN returns an MM sending response to the UE.
F16. The MMSC sends "MM4_forward.REQ" as an MM forwarding request.
F17. The recipient returns an MM forwarding response "MM4-forward.RES" to the MMSC.
F18. The MMSC sends a charging request "CCR" to the OCS to report the use of the quota.
F19. The OCS deducts an expense according to the associated rating result.
F20. The OCS returns a charging response.

### Another example

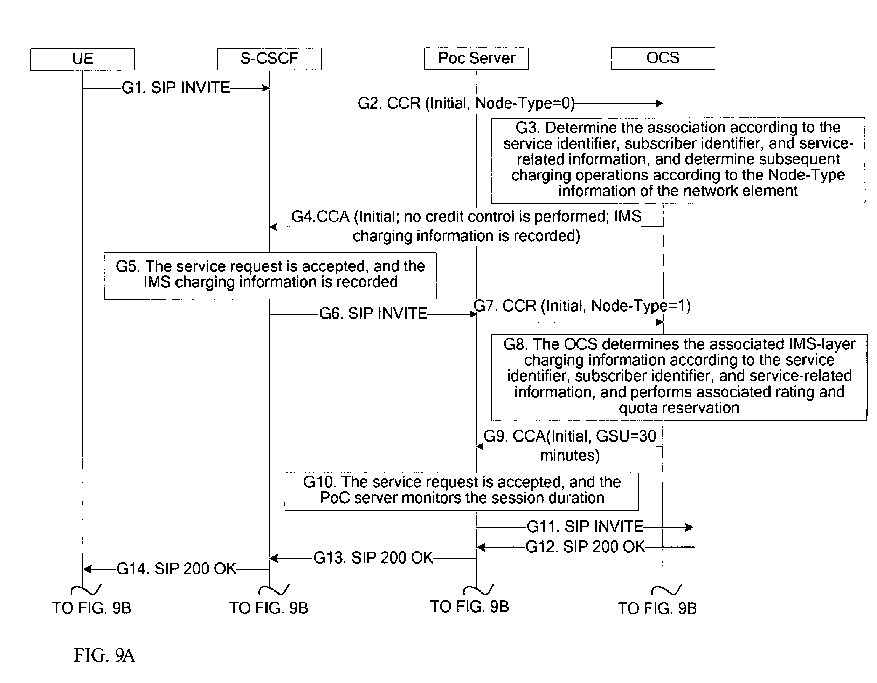

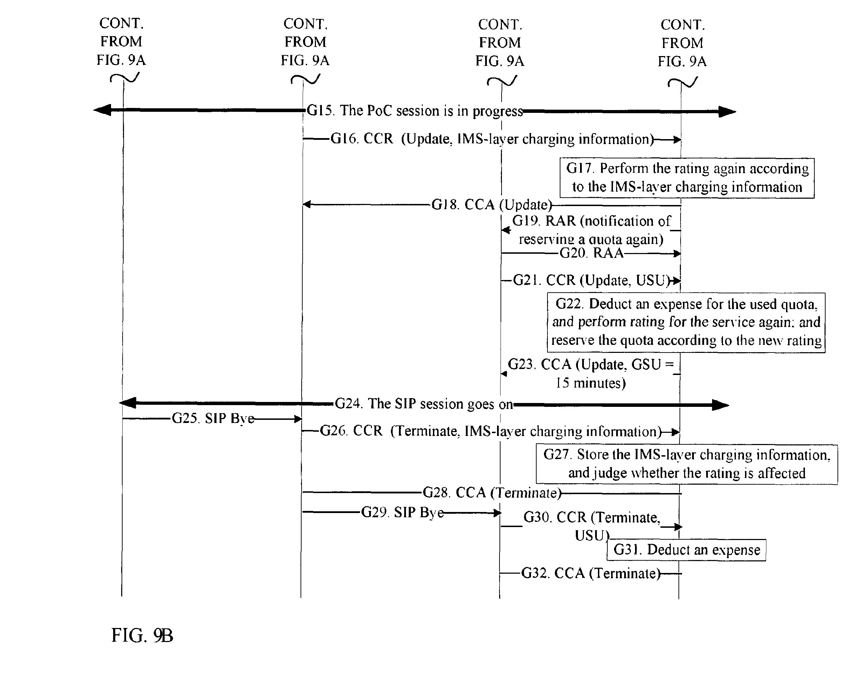

A charging method is provided in this example. The signaling flow of the charging method is shown in FIG. 9. In this embodiment, the technical solution under the disclosure is applied to online charging for a session service.

G1. The UE sends a SIP INVITE request to the S-CSCF.

G2. The S-CSCF sends a charging request to the OCS. The charging request carries the charging node type "Node-Type = Slave network element" of the S-CSCF in this service.

It is understandable that in this embodiment, the charging request may carry no charging node type identifier, and that the type of each network element is identified according to the charging information in the charging request sent by each network element. For example, the network element type is identified according to the service identifier of the network element, and/or subscription information, and/or network configuration information, which is conventional information carried in the charging request.

G3. The OCS determines the association according to the service identifier, subscriber identifier, and service-related information. The OCS determines the subsequent charging process according to the Node-Type of the network element. In this Push-to-Talk over Cellular (PoC) service, the S-CSCF reports the charging information of the IMS layer as a reference in the online associated charging, and does not need to perform credit control.

G4. The OCS returns a charging response to the S-CSCF.

G5. The service request is accepted.

G6. The S-CSCF sends the SIP INVITE request to the PoC server.

G7. The PoC server sends a charging request "CCR" to the OCS. The charging request carries the charging node type "Node-Type = Master network element" of the PoC server in this service.

G8. The OCS determines the associated S-CSCF charging information according to the service identifier, subscriber identifier, and service-related information. The OCS determines the subsequent charging process according to the Node-Type of the network element. In this PoC service, the PoC server serves as a master network element, and the OCS performs associated rating and reserves a quota.

G9. The OCS returns a charging response to the PoC server. The response carries the reserved quota, namely, GSU = 30 minutes.

G10. The service request is accepted, and the PoC server monitors the session duration. G11. The PoC server forwards the SIP INVITE message.

G12. The PoC server receives the SIP 200 OK message from the recipient.

G13. The PoC server forwards the SIP 200 OK message to the GGSN.

G 14. The S-CSCF forwards the SIP 200 OK message to the UE.

G 15. The PoC session is in progress.

G16. The S-CSCF sends an intermediate charging request "CCR" to the OCS. The request carries IMS-layer charging information.

G 17. The OCS performs rating for this PoC session again according to the IMS-layer charging information reported by the S-CSCF.

G 18. The OCS returns a charging response to the S-CSCF.

G19. The OCS sends a Re-Authentication Request (RAR) to the PoC server, notifying the PoC server to reserve a quota again.

G20. The PoC server returns a Re-Authentication Answer (RAA) as a confirmation to the OCS.

G21. The PoC server sends an intermediate charging request "CCR" to the OCS.

G22. The OCS deducts an expense for the used quota, and performs rating for the service again. The OCS reserves the quota according to the new rating.

G23. The OCS returns a charging response to the PoC server. The response carries the quota reserved according to the new rating. In this embodiment, the reserved quota is 15 minutes.

G24. The SIP session goes on.

G25. The UE sends a SIP BYE message to the S-CSCF.

G26. The S-CSCF sends a final charging request "CCR" to the OCS. The charging request carries IMS-layer charging information.

G27. The OCS stores the IMS-layer charging information, and judges whether the rating is affected.

G28. The OCS returns a charging response to the S-CSCF.

G29. The S-CSCF sends a SIP BYE message to the PoC server.

G30. The PoC server sends a final charging request "CCR" to the OCS to report the used quota "USU".

G31. The OCS deducts an expense for this service.

G32. The OCS returns a charging response to the PoC server.

### Another Embodiment

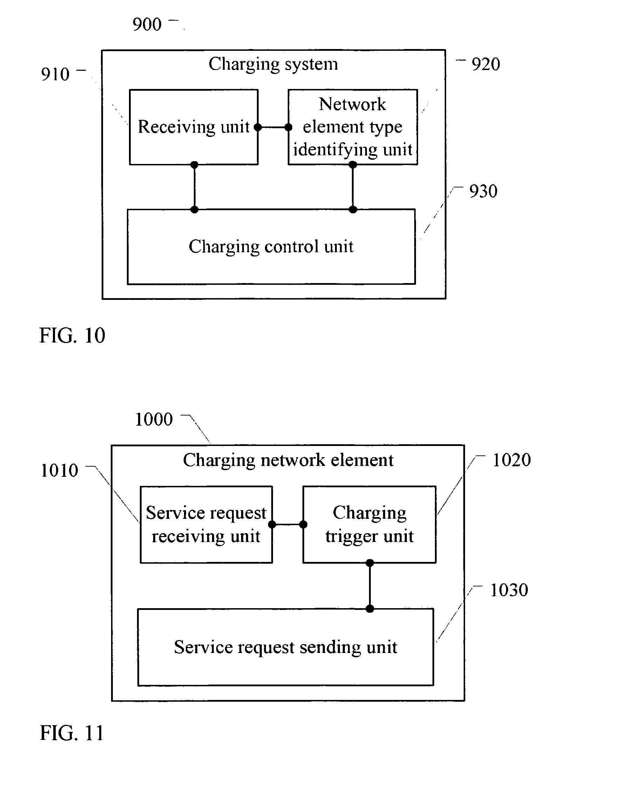

A charging system 900 is provided in this embodiment. As shown in FIG. 10, the charging system includes: a receiving unit 910, a network element type identifying unit 920, and a charging control unit 930.

The receiving unit 910 is configured to receive a charging request sent by each network element which performs charging control for a service stream, where the charging request carries corresponding charging information of each network element.

The charging request received by the receiving unit may further carry a charging node identifier.

The network element type identifying unit 920 is configured to identify the type of each network element, including a master network element and a slave network element.

The network element type identifying unit 920 identifies the type of each network element according to the charging node identifier.

It is understandable that the charging request received by the receiving unit 910 may carry no charging node identifier, and the type of each network element is identified by the network element type identifying unit 920 according to the charging information in the charging request sent by each network element. For example, the network element type is identified according to the service identifier of the network element, and/or subscription information, and/or network configuration information, which is conventional information carried in the charging request.

The charging control unit 930 is configured to perform charging according to the charging information of the master network element by associating the charging information with the charging information of the slave network element.

### Another example

A charging network element 1000 is provided in this example. As shown in FIG. 11, the charging network element 1000 includes:
a service request receiving unit 1010, configured to receive a service request from a user;
a charging trigger unit 1020, configured to send a charging request inclusive of charging information to a charging system after the service request receiving unit receives the service request of the user, and receive the charging response returned by the charging system, where the charging request sent by the charging trigger unit 1020 to the charging system may further carry the charging node type of the network element; and
a service request sending unit 1030, configured to forward the service request of the user to a next charging network element after the charging trigger unit 1020 receives a charging response indicative of service success from the charging system.

### Another example

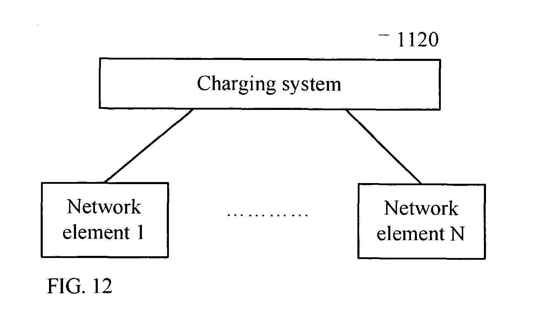

A communication system 1100 is provided in this example. As shown in FIG. 12, the communication system includes network elements 1-N and a charging system 1120.

The network elements 1-N are configured to perform charging control for a service stream, and send a charging request to the charging system. The charging request carries the corresponding charging information of each network element. The charging request sent by the network element may further carry the charging node identifier of the network element. Each network element sends the service request of a user to a next network element upon receiving the service success indication from the charging system.

It is understandable that in this embodiment, the network elements 1-N are at least two network elements which control the service stream and perform charging control for the service jointly.

The charging system 1120 is configured to identify the type of each network element, including a master network element and a slave network element; and perform charging for the master network element according to the charging information of the master network element by associating the charging information with the charging information of the slave network element.

The charging system may identify the type of each network element according to the charging node identifier.

### Another example

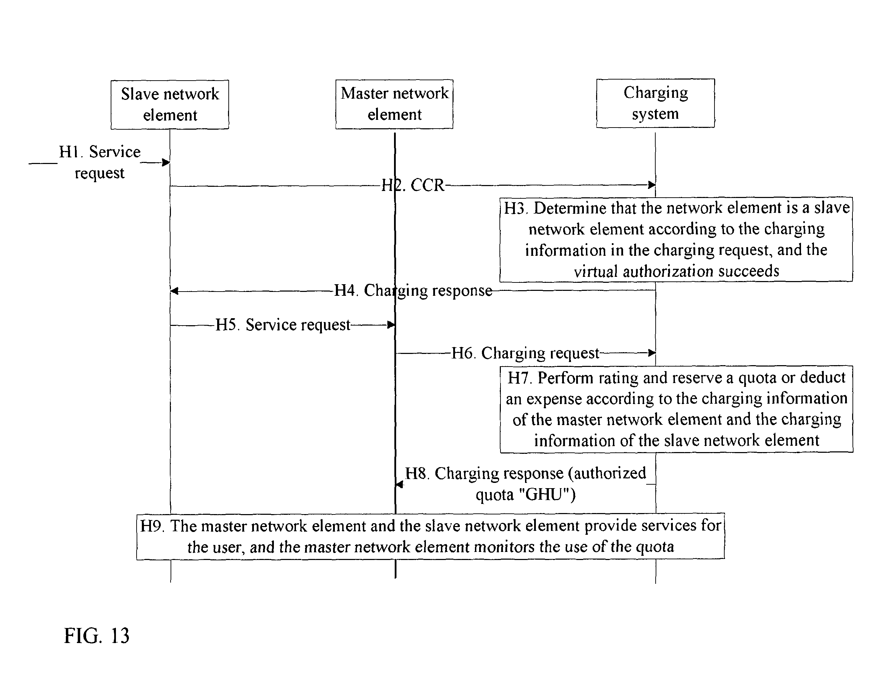

A charging method is provided in this example. F1G. 13 shows a signaling flowchart of this method. The method includes the following steps (in this embodiment, it is assumed that two network elements, namely, a master network element and a slave network element, perform charging control for the service):
H1. The slave network element receives a service request from a user.
H2. The slave network element sends a charging request to the charging system. The charging request carries charging information.
H3. The charging system receives the charging request, records the charging information in the charging request, and identifies that the network element is a slave network element according to the charging information in the charging request of the network element. For example, the network element type is identified according to the service identifier of the network element, and/or subscription information, and/or network configuration information, which is conventional information carried in the charging request.
H4. The charging system returns a charging response to the slave network element. If the credit control result identifier carried in the charging response is 0, it is indicated virtual authorization and no charging information needs to be reported subsequently.

It is understandable that the value of the credit control result identifier may be 0 or 1, which indicates a specific scenario of virtual authorization. If the credit control result identifier is 0, it is indicated that no charging information needs to be reported subsequently; and, if the credit control result identifier is 1, it is indicated that the network element needs to monitor use of service resources without the necessity of monitoring use of the quota, and needs to further report the charging information when preset trigger conditions are fulfilled.

If the value of the credit control result identifier is 2, it is indicated normal service control, and the charging system and the network element perform charging control in the conventional mode.

H5. The slave network element forwards the service request of the user to the master network element.

H6. The master network element sends a charging request to the charging system. The charging request carries charging information.

H7. According to the charging information in the charging request of the network element, the charging system identifies that the network element is a master network element, and determines that the master network element is the tlas network element which performs charging control for this service stream. Therefore, the charging system performs rating and reserves a quota for the master network element according to the charging information of the master network element by associating the charging information with the charging information of the slave network element.

H8. The charging system returns a charging response to the master network element. The charging response carries the authorized quota.

H9. The master network element and the slave network element provide services for the user, and the master network element monitors the use of the quota.

Optionally, in step H7, the charging system may further deduct an expense; or, after the service is completed in step H9, the master network element sends a charging request which carries the used quota to the charging system, and then the charging system deducts the expense and returns a charging response.

Detailed above are a charging method, and a charging system, under the disclosure.

In the embodiments of the disclosure, the charging control is triggered by the master network element, and the slave network element is responsible for reporting the charging information without performing credit control. In the charging process, credit control is performed for the master network element in view of the charging information of the slave network element, and centralized charging is performed at the master network element. Compared with the prior art, the disclosure simplifies the charging process, reduces the load of processing and interaction between the charging system and the charging network element, and saves the system resources.

## Claims

1. A charging method, comprising:
receiving (S2, S6), by a charging system (900), a charging request sent by a master network element performing charging control for a service stream and a charging request sent by a slave network element performing charging control for the service stream, wherein the charging requests carry corresponding charging information of each network element;
returning (S4), by the charging system (900), a charging response to the slave network element to indicate that the slave network element does not need to report the charging information subsequently; and
performing (S7, S8), by the charging system (900), credit control for the master network element, which monitors use of a quota, according to the charging information of the master network element by associating the charging information of the master network element with the charging information of the slave network element.

2. The method of claim 1, wherein the performing credit control for the master network element comprises:
sending, by the charging system, a notification of reapplying for the quota to the master network element;
sending, by the master network element, the charging request to the charging system after receiving the notification; and
performing, by the charging system, rating, quota reservation and/or expense deduction according to the charging information of the master network element by associating the charging information with the charging information of the slave network element, and returning the quota that needs to be monitored to the master network element.

3. The method of claim 1, further comprises:
judging whether the master network element is a last network element which performs charging control for the service stream;
if such is the case, continuing the performing credit control for the master network element according to the charging information of the master network element by associating the charging information with the charging information of the slave network element; and
if such is not the case, returning a charging response to the master network element to indicate that temporary authorization succeeds and that subsequent credit control is pending.

4. The method of claim 3, wherein the charging response returned to the master network element carries a credit control result identifier which is used to indicate that the temporary authorization succeeds and that the subsequent credit control is pending.

5. A charging system (900), comprising:
a receiving unit (910), configured to receive a charging request sent by a master network element performing charging control for a service stream and a charging request sent by a slave network element performing charging control for the service stream, wherein the charging requests carry corresponding charging information of each network element;
a network element type identifying unit (920), configured to identify the type of each network element, comprising the master network element and the slave network element; and
a charging control unit (930), configured to return a charging response to the slave network element to indicate that the slave network element does not need to report the charging information subsequently, and to perform credit control for the master network element, which monitors use of a quota, according to the charging information of the master network element by associating the charging information of the master network element with the charging information of the slave network element.

## Patentansprüche

1. Vergebührungsverfahren, das die folgenden Schritte umfasst:
ein Vergebührungssystem (900) empfängt (S2, S6) eine Vergebührungsanforderung,
die durch ein Master-Netzelement gesendet wird, das Vergebührungssteuerung für einen Dienststrom ausführt, und eine Vergebührungsanforderung, die durch ein Slave-Netzelement gesendet wird, das Vergebührungssteuerung für den Dienststrom ausführt, wobei die Vergebührungsanforderungen entsprechende Vergebührungsinformationen jedes Netzelements führen;
das Vergebührungssystem (900) gibt eine Vergebührungsantwort an das Slave-Netzelement zurück (S4), um anzuzeigen, dass das Slave-Netzelement die Vergebührungsinformationen danach nicht melden muss; und
das Vergebührungssystem (900) führt Kreditsteuerung für das Master-Netzelement,
die Verwendung eines Quotums überwacht, gemäß den Vergebührungsinformationen des Master-Netzelements aus (S7,S8), indem die Vergebührungsinformationen des Master-Netzelements mit den Vergebührungsinformationen des Slave-Netzelements assoziiert werden.

2. Verfahren nach Anspruch 1, wobei das Ausführen von Kreditsteuerung für das Master-Netzelement die folgenden Schritte umfasst:
das Vergebührungssystem sendet eine Benachrichtigung der Neubewerbung um das Quotum zu dem Master-Netzelement;
das Master-Netzelement sendet die Vergebührungsanforderung zu dem Vergebührungssystem nach dem Empfang der Benachrichtigung; und
das Vergebührungssystem führt Rating, Quotum-Reservierung und/oder Kostendeduktion gemäß den Vergebührungsinformationen des Master-Netzelements aus,
indem die Vergebührungsinformationen mit den Vergebührungsinformationen des Slave-Netzelements assoziiert werden, und gibt das Quotum, das überwacht werden muss, an das Master-Netzelement zurück.

3. Verfahren nach Anspruch 1, ferner umfassend:
Beurteilen, ob das Master-Netzelement ein letztes Netzelement ist, das Vergebührungssteuerung für den Dienststrom ausführt;
wenn das der Fall ist, Fortsetzen des Ausführens von Kreditsteuerung für das Master-Netzelement gemäß den Vergebührungsinformationen des Master-Netzelements,
indem die Vergebührungsinformationen mit den Vergebührungsinformationen des Slave-Netzelements assoziiert werden; und
wenn das nicht der Fall ist, Zurückgeben einer Vergebührungsantwort an das Master-Netzelement, um anzuzeigen, dass temporäre Autorisierung erfolgreich ist und dass nachfolgende Kreditsteuerung ansteht.

4. Verfahren nach Anspruch 3, wobei die an das Master-Netzelement zurückgegebene Vergebührungsantwort eine Kreditsteuerungsergebniskennung führt, die verwendet wird, um anzuzeigen, dass die temporäre Autorisierung erfolgreich ist und dass die nachfolgende Kreditsteuerung ansteht.

5. Vergebührungssystem (900), umfassend:
eine Empfangseinheit (910), die dafür ausgelegt ist, eine Vergebührungsanforderung,
die durch ein Master-Netzelement, das Vergebührungssteuerung für einen Dienststrom ausführt, gesendet wird, und eine Vergebührungsanforderung, die durch ein Slave-Netzelement, das Vergebührungssteuerung für den Dienststrom ausführt,
gesendet wird, zu empfangen, wobei die Vergebührungsanforderungen entsprechende Vergebührungsinformationen jedes Netzelements führen;
eine Netzelement-Typidentifizierungseinheit (920), die dafür ausgelegt ist, den Typ jedes Netzelements, umfassend das Master-Netzelement und das Slave-Netzelement zu identifizieren; und
eine Vergebührungssteuereinheit (930), die dafür ausgelegt ist, eine Vergebührungsantwort an das Slave-Netzelement zurückzugeben, um anzuzeigen, dass das Slave-Netzelement die Vergebührungsinformationen danach nicht melden muss, und
Kreditsteuerung für das Master-Netzelement, die Verwendung eines Quotums überwacht, gemäß den Vergebührungsinformationen des Master-Netzelements auszuführen, indem die Vergebührungsinformationen des Master-Netzelements mit den Vergebührungsinformationen des Slave- Netzelements assoziiert werden.

## Revendications

1. Procédé de facturation, comprenant :
la réception (S2, S6), par un système de facturation (900), d'une requête de facturation envoyée par un élément de réseau maître exécutant une commande de facturation d'un flux de service et d'une requête de facturation envoyée par un élément de réseau esclave exécutant une commande de facturation du flux de service,
dans lequel les requêtes de facturation portent des informations de facturation correspondantes de chaque élément de réseau ;
le renvoi (S4), par le système de facturation (900), d'une réponse de facturation à l'élément de réseau esclave pour indiquer que l'élément de réseau esclave n'a pas à communiquer les informations de facturation ultérieurement ; et
l'exécution (S7, S8), par le système de facturation (900), d'un contrôle de crédit pour l'élément de réseau maître, lequel contrôle l'utilisation d'un quota, en fonction des informations de facturation de l'élément de réseau maître en associant les informations de facturation de l'élément de réseau maître aux informations de facturation de l'élément de réseau esclave.

2. Procédé selon la revendication 1, dans lequel l'exécution du contrôle de crédit pour l'élément de réseau maître comprend :
l'envoi, par le système de facturation, d'une notification de réapplication du quota à l'élément de réseau maître ;
l'envoi, par l'élément de réseau maître, de la requête de facturation au système de facturation après la réception de la notification ; et
l'exécution, par le système de facturation, d'un tarif, d'une réservation de quota et/ou de déduction de frais en fonction des informations de facturation de l'élément de réseau maître en associant les informations de facturation aux informations de facturation de l'élément de réseau esclave, et le renvoi du quota qui doit être contrôlé à l'élément de réseau maître.

3. Procédé selon la revendication 1, comprenant en outre :
le jugement que l'élément de réseau maître est ou non un dernier élément de réseau qui exécute une commande de facturation du flux de service ;
dans l'affirmative, la continuation de l'exécution du contrôle de crédit pour l'élément de réseau maître en fonction des informations de facturation de l'élément de réseau maître en associant les informations de facturation aux informations de facturation de l'élément de réseau esclave ; et
dans la négative, le renvoi d'une réponse de facturation à l'élément de réseau maître pour indiquer qu'une autorisation temporaire suit et qu'un contrôle de crédit ultérieur va se produire.

4. Procédé selon la revendication 3, dans lequel la réponse de facturation renvoyée à l'élément de réseau maître porte un identifiant de résultat de contrôle de crédit qui sert à indiquer que l'autorisation temporaire suit et que le contrôle de crédit ultérieur va se produire.

5. Système de facturation (900) comprenant :
une unité de réception (910), configurée pour recevoir une requête de facturation envoyée par un élément de réseau maître exécutant une commande de facturation d'un flux de service et une requête de facturation envoyée par un élément de réseau esclave exécutant une commande de facturation du flux de service, dans lequel les requêtes de facturation portent des informations de facturation correspondantes de chaque élément de réseau ;
une unité d'identification de type d'élément de réseau (920), configurée pour identifier le type de chaque élément de réseau, comprenant l'élément de réseau maître et l'élément de réseau esclave ; et
une unité de commande de facturation (930), configurée pour renvoyer une réponse de facturation à l'élément de réseau esclave pour indiquer que l'élément de réseau esclave n'a pas à communiquer les informations de facturation ultérieurement, et
exécuter un contrôle de crédit pour l'élément de réseau maître, lequel contrôle l'utilisation d'un quota, en fonction des informations de facturation de l'élément de réseau maître en associant les informations de facturation de l'élément de réseau maître aux informations de facturation de l'élément de réseau esclave.
